(19) **Europäisches Patentamt / European Patent Office / Office européen des brevets**

(11) **EP 4 583 014 A1**

(12) **EUROPEAN PATENT APPLICATION**
published in accordance with Art. 153(4) EPC

(43) Date of publication:
**09.07.2025 Bulletin 2025/28**

(21) Application number: **22957338.1**

(22) Date of filing: **30.08.2022**

(51) International Patent Classification (IPC):
*G06N 20/00* (2019.01)

(52) Cooperative Patent Classification (CPC):
**G06N 20/00**

(86) International application number:
**PCT/JP2022/032546**

(87) International publication number:
**WO 2024/047735 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **FUKUDA, Takasaburo**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **FAIRNESS EVALUATION PROGRAM, FAIRNESS EVALUATION METHOD, AND INFORMATION PROCESSING DEVICE**

(57)     A method includes: obtaining data pieces; identifying a first ratio of data pieces with a first attribute of the data pieces having a first value, among the data pieces; identifying a second ratio of data pieces with the first attribute having the first value in a first group, and a third ratio of data pieces with the first attribute having the first value in a second group, the first group being a group where a second attribute has a second value, the second group being a group where the second attribute has a third value; and executing a fairness evaluation for a third group where the second attribute has the second value and a third attribute has a fourth value, when a fourth ratio of data pieces with the first attribute having the first value in the third group meets a criterion based on the first to third ratios.

FIG.7

**Description**

TECHNICAL FIELD

The present disclosure relates to a fairness evaluation program, a fairness evaluation method, and an information processing device.

BACKGROUND ART

A machine learning model trained using data including bias may produce unfair inference results, such as inference results that may lead to discrimination. Bias refers to, for example, disparities in protected attributes such as gender. Protected attributes may include gender, race, skin color, nationality, and age.

To evaluate the fairness of data, fairness may be evaluated on subgroups included in the data. A subgroup is defined by a combination of protected attribute(s) and other attribute(s).

CITATION LIST

NON-PATENT DOCUMENT

[Non-Patent Document 1] Pedreschi, D., Ruggieri, S. and Turini, F.: Discrimination-aware data mining, Proc. 14th ACM SIGKDD Int. Conf. on Knowledge Discovery and Data Mining, pp.560-568, 2008
[Non-Patent Document 2] KAMIRAN, Faisal; ZLIOBAITE, Indre; CALDERS, Toon. Quantifying explainable discrimination and removing illegal discrimination in automated decision making. Knowledge and information systems, 2013.

SUMMARY OF THE INVENTION

PROBLEMS TO BE SOLVED BY THE INVENTION

However, as the number of attributes combined increases, the number of subgroups increases. When fairness is evaluated across all subgroups, the computational load increases as the number of subgroups grows.

On the other hand, an approach can be considered where the fairness evaluation for lower-level subgroups included in an upper-level subgroup that can be explained as fair is omitted to terminate the process. However, there may be a potential risk of unfairness in the lower-level subgroups included in the subgroup that can be explained as fair.

As such, in the above-mentioned approaches, it may be challenging to reduce the computational load for evaluating the fairness of data used for training in machine learning.

In one aspect, an object of the present disclosure is to reduce the computational load for evaluating the fairness of data used for training in machine learning.

MEANS TO SOLVE THE PROBLEM

According to an aspect of the embodiments, a fairness evaluation program may cause a computer to execute a process includes the following. The process may include obtaining a plurality of data pieces. The process may include identifying a first ratio of an occurrence of data pieces with a first attribute of a plurality of attributes of the plurality of data pieces having a first value, among the plurality of data pieces. The process may include identifying a second ratio of an occurrence of data pieces with the first attribute having the first value in a first group, and a third ratio of an occurrence of data pieces with the first attribute having the first value in a second group, the first group being a group where a second attribute of the plurality of attributes has a second value, the second group being a group where the second attribute has a third value. The process may include executing a fairness evaluation for a third group where the second attribute has the second value and a third attribute of the plurality of attributes has a fourth value, when a fourth ratio of an occurrence of data pieces with the first attribute having the first value in the third group meets a criterion based on the first ratio, the second ratio, and the third ratio.

EFFECT OF THE INVENTION

In one aspect, the computational load for evaluating the fairness of data used for training in machine learning can be reduced.

BRIEF DESCRIPTION OF DRAWINGS

FIG. 1 is a diagram for illustrating the fairness of an inference result from a machine learning model.
FIG. 2 is a diagram illustrating one example of data to be processed by a fairness evaluation apparatus.
FIG. 3 is a diagram illustrating one example of a criterion on whether or not to execute a fairness evaluation by the fairness evaluation apparatus.
FIG. 4 is a diagram illustrating another example of data to be processed by the fairness evaluation apparatus.
FIG. 5 is a diagram illustrating one example of a plurality of subgroups in the data illustrated in FIG. 4.
FIG. 6 is a block diagram illustrating an example of the functional configuration of a fairness evaluation apparatus according to one embodiment.
FIG. 7 is a flowchart illustrating an example of operations of the fairness evaluation apparatus according to one embodiment.
FIG. 8 is a block diagram illustrating an example of the hardware (HW) configuration of a computer that embodies the functions of the fairness evaluation apparatus according to one embodiment.

DESCRIPTION OF EMBODIMENT(S)

Hereinafter, an embodiment of the present disclosure will be described with reference to the drawings. However, the embodiment described below is merely exemplary, and it is not intended to exclude various modifications or applications of the techniques not explicitly described in the following. For example, various modifications can be embodied without departing from the scope thereof. In the drawings used in the following description, elements denoted with the like reference symbols denote the same or similar elements, unless otherwise stated.

[A] Description of Fairness Evaluation Process according to One Embodiment

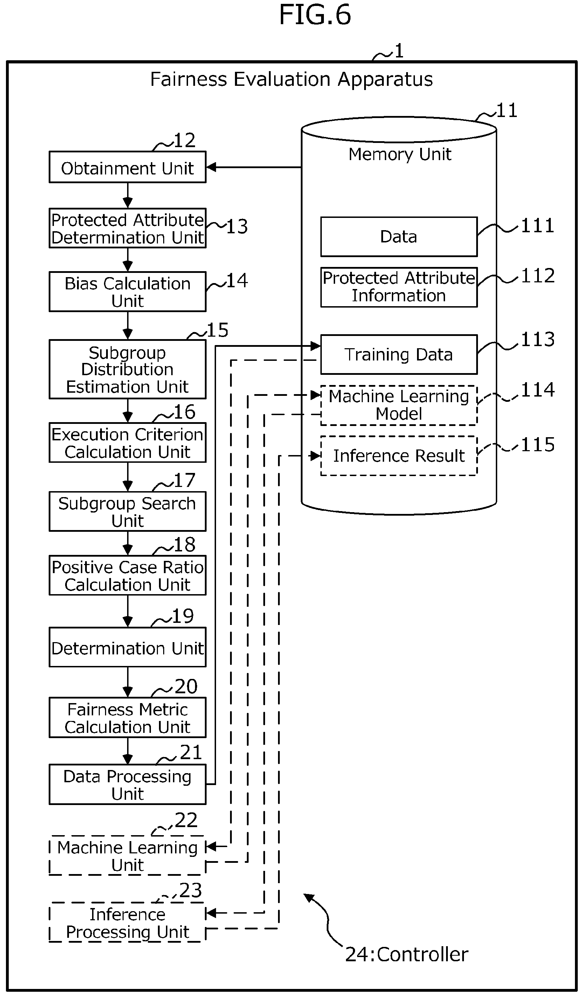

In the following, an approach for evaluating the fairness of training data will be described with reference to a fairness evaluation apparatus 1 (see FIG. 6) according to one embodiment as an example.

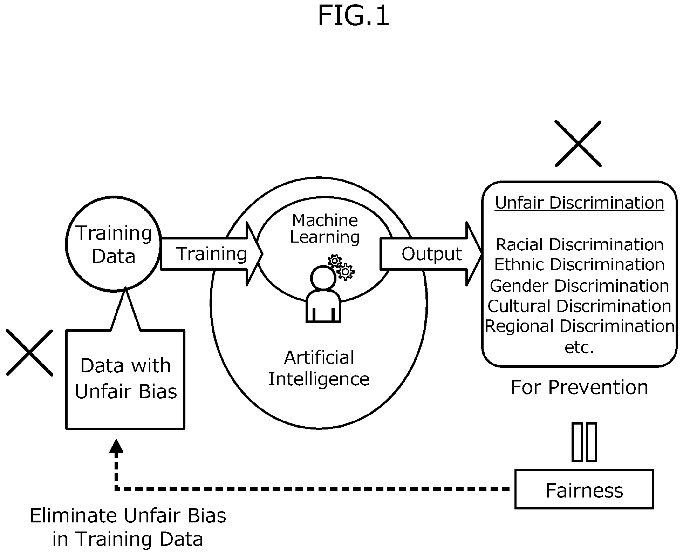

FIG. 1 is a diagram for illustrating the fairness of an inference result from a machine learning model. When a machine learning model is trained using a dataset containing unfair bias as training data, the trained machine learning model may produce unfair inference results, such as inference results that may lead to unfair discriminations. Training data represents one example of a plurality of data pieces to be processed by a fairness evaluation apparatus 1. Discriminations include discrimination related to protected attributes.
Protected attributes may also be referred to as sensitive attributes. Examples of protected attributes include at least one attribute specified in the United States Fair Housing Act (FHA), such as race, skin color, nationality, religion, gender, household status, and the presence or absence of disability. Other examples of protected attributes include at least one attribute specified in the United States Equal Credit Opportunity Act (ECIA), such as marital status, the presence or absence of public assistance, and age.
To suppress the output of unfair inference results from a machine learning model, the fairness evaluation apparatus 1 performs an evaluation of fairness to determine whether or not bias is present in training data, in relation to certain protected attributes such as gender.
Based on the result of the fairness evaluation, the fairness evaluation apparatus 1 may process a part of the plurality of training data pieces to generate training data for machine learning from which unfair bias has been removed (eliminated). This allows the original biased training data to be modified, for example, extended, into suitable training data without bias. The fairness evaluation apparatus 1 may also perform training on the machine learning model using training data generated as such.

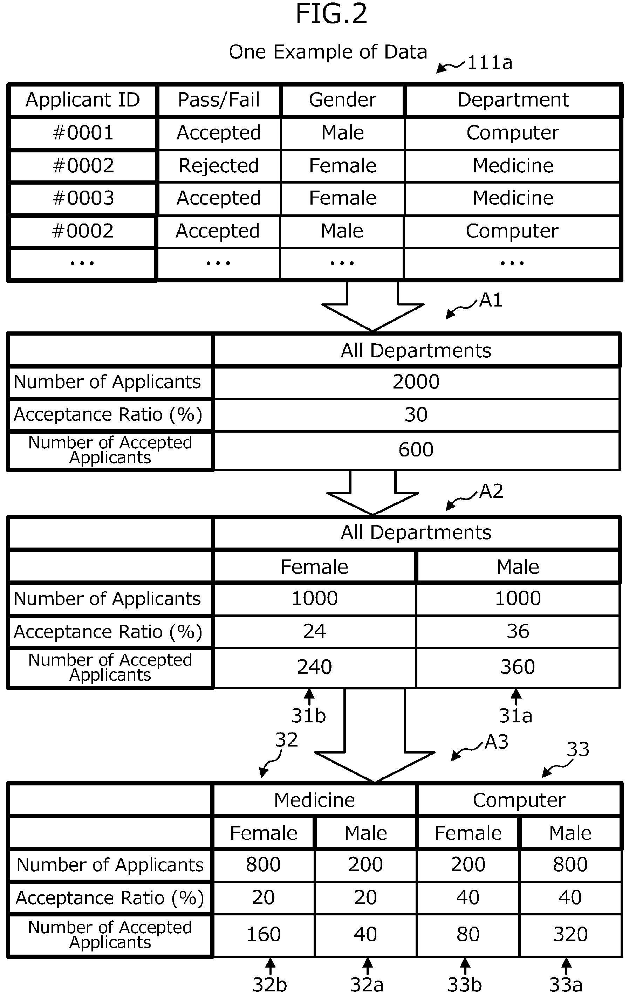

FIG. 2 is a diagram illustrating one example of data 111a to be processed by the fairness evaluation apparatus 1. The fairness evaluation apparatus 1 obtains data 111a and protected attribute information from an apparatus (not illustrated) that provides data.
The data 111a represents one example of a plurality of data pieces (dataset) obtained by the fairness evaluation apparatus 1. The data 111a may be processed to generate training data used for training the machine learning model. The data 111a includes a plurality of attributes. Each of the plurality of attributes may be a protected or non-protected attribute.
The protected attribute information is information specifying attributes that are protected among a plurality of attributes. For example, the protected attribute information may be defined in advance based on external knowledge such as laws. Non-protected attributes refer to attributes other than the protected attributes among the plurality of attributes.

The fairness evaluation apparatus 1 determines a first attribute among the plurality of attributes included in the data 111a, and also determines, based on the protected attribute information, a second attribute among the plurality of attributes included in the data 111a.

The first attribute is, for example, an objective variable (a target variable). In the example illustrated in FIG. 2, the first attribute indicates whether an applicant to a particular university has been accepted or rejected (passed or failed). The second attribute is, for example, one of the protected attributes. In FIG. 2, the second attribute is "gender". Attributes other than the objective variable, such as the second attribute, may also be referred to as explanatory variables.

In one embodiment, the value indicating "accepted" among the values of the first attribute (e.g., accepted or rejected) may be positive, or the positive case, and represents one example of a first value. The fairness evaluation apparatus 1 may, for example, identify the ratio (first ratio, positive case ratio) of (the occurrence of) data pieces with the first attribute having the first value to (the occurrence of) data pieces with the first attribute having various values included, included in the data 111a. Note that the ratio of the occurrence of the first value may be included in the data 111a. As denoted by the symbol A1 in FIG. 2, the first ratio is the "Acceptance Ratio" which is 30% (0.3).

Furthermore, in one embodiment, as denoted by the symbol A2 in FIG. 2, among the values of the second attribute (e.g., gender), the value indicating "Male" represents one example of a second value, and the value indicating "Female" represents one example of a third value. The data 111a may include a first group 31a where the second attribute has the second value, and a second group 31b where the second attribute has the third value. The first group 31a represents one example of a first group, and the second group 31b represents one example of a second group.

The fairness evaluation apparatus 1 identifies the ratio (positive case ratio) of (the occurrence of) data pieces with the first attribute having the first value in the first group 31a (in FIG. 2, "Accepted"), as the second ratio. Additionally, the fairness evaluation apparatus 1 identifies the ratio of the occurrence of data pieces with the first attribute having the first value in the second group 31b, as the third ratio. In the example of FIG. 2, the second ratio is 36% (0.36) and the third ratio is 24% (0.24).

In FIG. 2, when focusing on the acceptance ratio across all departments, there is a difference in the positive case ratio (acceptance ratio) in the objective variable between males and females. Therefore, the data 111a appears to contain bias (skew) in the protected attribute of gender. However, as will be described below, dividing the data 111a into subgroups reveals that the data 111a does not contain bias in the protected attribute.

The symbol A3 in FIG. 2 denotes subgroups 32 and 33 which divide the first group 31a and the second group 31b based on a third attribute (e.g., "Department"). The subgroup 32 has a value of "Medicine" for the third attribute (e.g., "Department"), and the subgroup 33 has a value of "Computer" for the third attribute (e.g., "Department").

The subgroup 32 may include a subgroup 32a where the second attribute has the value "Male", and a subgroup 32b where the second attribute has the value "Female". Likewise, the subgroup 33 may include a subgroup 33a where the second attribute has the value "Male" and a subgroup 33b where the second attribute has the value "Female".

Each of the subgroups 32a and 33a represents one example of a third group where the second attribute (gender) has the second value (e.g., male) and the third attribute (e.g., "department") has the fourth value. Note that, the second value may be "Female" while the third value may be "Male" in the second attribute ("gender"). In this case, each of the subgroups 32b and 33b represents one example of the third group where the second attribute (gender) has the second value (e.g., female) and the third attribute (e.g., "department") has the fourth value.

The fairness evaluation apparatus 1 may identify the ratios of (the occurrences of) data pieces with the first attribute having the first value (in FIG. 2, "Accepted") in the plurality of third groups, as fourth ratios. In FIG. 2, the fourth ratio in the subgroup 32a is 20% (0.2), and the fourth ratio in the subgroup 33a is 40% (0.4). The fourth ratio in the subgroup 32b is 20% (0.2), and the fourth ratio in the subgroup 33b is 40% (0.4).

In this manner, dividing the data 111a into the subgroups 32 and 33 reveals that the positive case ratios in the subgroups 32 and 33 have no difference between genders, indicating that the data 111a does not contain bias related to the protected attribute.

Here, the fairness evaluation apparatus 1 according to one embodiment determines whether or not to execute a fairness evaluation for the third group(s), based on whether or not the fourth ratio of (the occurrence of) data pieces with the first attribute being the positive case in each third group satisfies a criterion based on the first ratio, the second ratio, and the third ratio.

For example, the fairness evaluation apparatus 1 executes the fairness evaluation for subgroups where the fourth ratio meets the criterion, among the plurality of subgroups. On the other hand, the fairness evaluation apparatus 1 suppresses, as one example, omits (does not execute), the fairness evaluation for subgroups where the fourth ratio does not meet the criterion, among the plurality of subgroups.

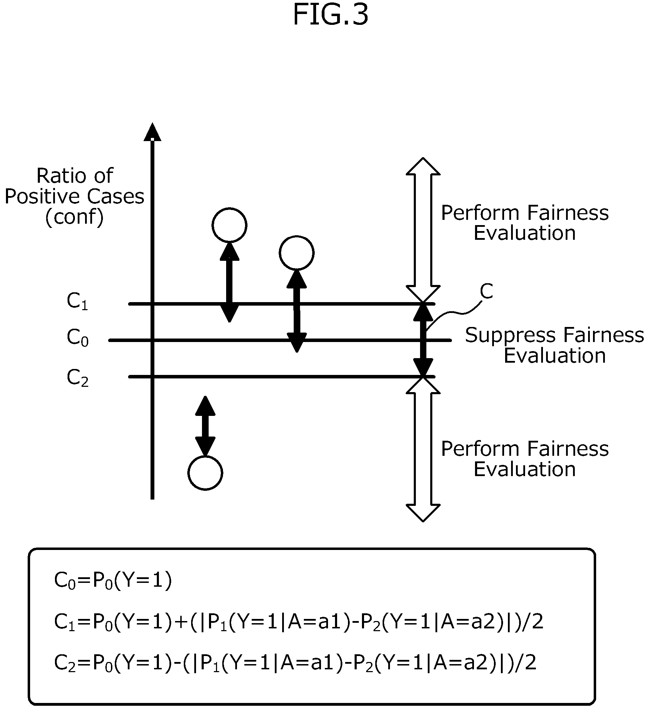

FIG. 3 is a diagram illustrating one example of the criterion for determining whether or not to execute the fairness evaluation by the fairness evaluation apparatus 1. The vertical axis in FIG. 3 corresponds to the positive case ratio.

In FIG. 3, parameters $C_0$, $C_1$, and $C_2$ may be calculated based on the following formulas (1) to (3):

$$C_0 = P_0 \tag{1}$$

$$C_1 = P_0 + (|P_1 - P_2|) / 2 \tag{2}$$

$$C_2 = P_0 - (|P_1 - P_2|) / 2 \tag{3}$$

In the above formulas (1) to (3), $P_0$ represents the first ratio $P_0$ (Y = 1). Y is the objective variable, and Y = 1 indicates that the first attribute has the first value.

In the above formulas (2) and (3), $P_1$ represents the second ratio $P_1$ (Y = 1 | A = a1), and $P_2$ represents the third ratio $P_2$ (Y = 1 | A = a2). A = a1 means that the second attribute has the second value. A = a2 means that the second attribute has the third value (the second value does not equal the third value) . Furthermore, Y = 1 | A = a1 means Y = 1 and A = a1, while Y = 1 | A = a2 means Y = 1 and A = a2.

In the example illustrated in FIG. 2, the first ratio $P_0$ (Y = 1) = 0.3, the second ratio $P_1$ (Y = 1 | A = a1) = 0.36, and the third ratio $P_2$ (Y = 1 | A = a2) = 0.24. Therefore, $C_0$ = 0.3, $C_1$ = 0.3 + (0.36 - 0.24) / 2 = 0.36, and $C_2$ = 0.3 - (0.36 - 0.24) / 2 = 0.24.

The calculation of the parameters $C_0$ to $C_2$ based on the above formulas (1) to (3) may also be understood as being performed based on the calculation of the numerical range C according to the following formula (4):

$$\text{Numerical range } C = |P_1 - P_2| \tag{4}$$

For example, the fairness evaluation apparatus 1 may calculate the numerical range C based on the above formula (4) and calculate the upper limit $C_1$ and the lower limit $C_2$ of the numerical range C so that the parameter $C_0$ of the above formula (1) is included within the numerical range C (as one example, the parameter $C_0$ is the median) .

In one embodiment, if the fourth ratio > $C_1$ or the fourth ratio < $C_2$, in other words, if the fourth ratio is outside the numerical range C, the fairness evaluation apparatus 1 may determine that the fourth ratio meets the criterion.

For example, a fairness evaluation is executed for subgroups where the fourth ratio (positive case ratio), which is the ratio of the occurrence of data pieces with the first attribute having the first value, meets the criterion of "fourth ratio > $C_1$ or fourth ratio < $C_2$", among the plurality of subgroups (third groups). On the other hand, the execution of the fairness evaluation is suppressed for groups where the fourth ratio (positive case ratio) is "$C_1 \geq$ fourth ratio $\geq C_2$", among the plurality of subgroups (third groups).

Here, the first ratio $P_0$ (Y = 1) is one example of a metric related to the estimated distribution of the positive case ratios in subgroups. In this example, it is assumed that the estimated distribution of the positive case ratios in subgroups follows a normal distribution and that the center of the normal distribution corresponds to the first ratio $P_0$ (Y=1), which is the overall positive case ratio for the objective function.

According to this assumption, the positive case ratio in each subgroup is expected to be densely distributed around the center of the normal distribution, but the positive case ratio(s) in subgroup (s) containing unfair bias are expected to be distributed away from the center of the normal distribution. Thus, subgroups of which the estimated distribution of the positive case ratios in the subgroup are near the center do not contain unfair bias, and thus the omission of the execution of the fairness evaluation is permissible. Therefore, the execution of the fairness evaluation is suppressed for such subgroups, whereby the computational load for evaluating the fairness of data is reduced.

As expressed by the above formula (4), the second ratio $P_1$ and the third ratio $P_2$ used for the calculation of the numerical range C (the difference between the parameters $C_1$ and $C_2$) are examples of metrics that represent the statistical measure of bias present between the values of the protected attribute of interest (e.g., between male and female). As the difference between the second ratio $P_1$ (Y = 1 | A = a1) and the third ratio $P_2$ (Y = 1 | A = a2) increases, the numerical range C widens and the number of subgroups to execute the fairness evaluation is thus reduced. In this manner, as the difference between the second ratio $P_1$ and the third ratio $P_2$ increases, the effect of reducing the computational load is enhanced.

In the example illustrated in FIG. 2, third groups are groups with the second attribute having the second value (in one example, gender is male) and another attribute (the third attribute, e.g., the department applied to) with a certain value (the fourth value, e.g., the Department of Medicine). However, another attribute (third attribute) is not limited to a single attribute and may be a combination of a plurality of attributes.

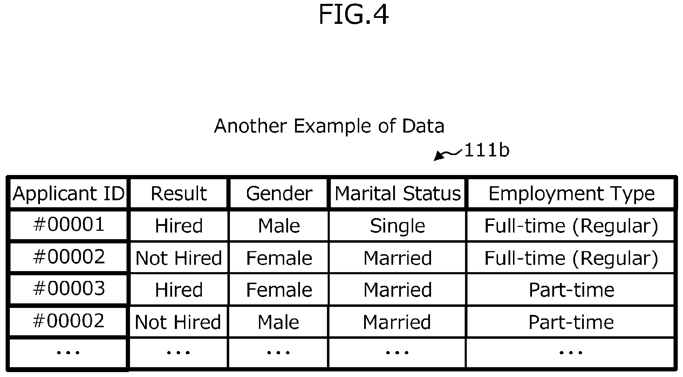

FIG. 4 illustrates another example of data 111b to be processed by the fairness evaluation apparatus 1. The data 111b is another example of a plurality of data pieces (dataset) obtained. The data 111b represents one example of training data used for training a machine learning model.

The data 111b illustrated in FIG. 4 has an attribute that indicates the employment result (hired or not hired) of applicants to a certain company, as the first attribute. The data 111b also includes an attribute of gender as the second attribute (protected attribute). The data 111b may further include marital status (single or married) and the type of employment applied for (full-time (regular) or part-time (part timer)) as attributes (explanatory variables).

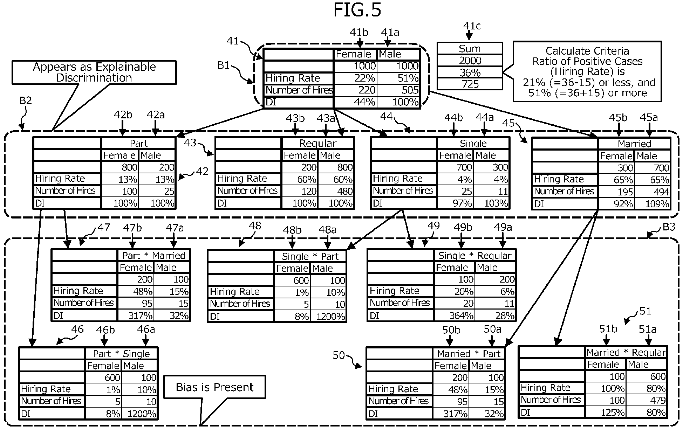

FIG. 5 is a diagram illustrating an example of a plurality of subgroups in the data 111b illustrated in FIG. 4. As denoted by the symbol B1 in FIG. 5, data 41 having the first attribute (employment decision) (entire data 111b) is divided into a first group 41a with the second attribute (e.g., "gender") having the second value (male), and a second group 41b with the second attribute having the third value (female).

Additionally, from the data 41, the "hiring rate" is identified as the first ratio $P_0$ (positive case ratio) for the first value (e.g., "Hired") of the first attribute (e.g., employment decision). In the example in FIG. 5, the first ratio $P_0$ is 36% (0.36).

In FIG. 5, the Disparate Impact (DI) is a fairness evaluation index and one example of a fairness metric. The DI is the proportion of the positive case ratios between the second group with the second attribute having the second value and the third group with the second attribute having the third value. In one embodiment, the fairness evaluation apparatus 1 may execute the fairness evaluation using the DI.

The DI in the second group (e.g., male) may be calculated as the positive case ratio of the second group / the positive case ratio of the third group, and the DI in the third group (e.g., female) may be calculated as the positive case ratio of the third group / the positive case ratio of the second group.

In the example in FIG. 5, the second ratio $P_1$ (hiring rate) representing the ratio of the occurrences of data pieces with the first attribute having the first value (hired) in the first group 41a is 51% (0.51), and the third ratio $P_2$ representing the ratio of the occurrences of data pieces with the first attribute having the first value 41b in the second group is 22% (0.22).

In the case of FIG. 5, the parameters for the criterion described in FIG. 3 based on the overall statistics combining male and female (see the symbol 41c) are: $C_0 = 0.36$, $C_1 = 0.36 + (0.51 - 0.22) / 2 = 0.51$, and $C_2 = 0.36 - (0.51 - 0.22) / 2 = 0.22$. Therefore, in the example in FIG. 5, subgroups in which the positive case ratio > 0.51 or the positive case ratio < 0.22 are subject to the fairness evaluation.

The symbol B2 in FIG. 5 denotes subgroups 42 to 45, which are grouped by dividing the first group 41a and the second group 41b based on the third attribute (for example, "Employment Type", or "Marital Status"). The third attribute (e.g., "Employment Type") has the value "part-time" (indicated as "Part" in FIG. 5) in the subgroup 42, and the third attribute (e.g., "Employment Type") has the value "full-time" (indicated as "Regular" in FIG. 5) in the subgroup 43. The third attribute (e.g., "Marital Status") has the value "Single" in the subgroup 44 and the third attribute (e.g., "Marital Status") has the value "Married" in the subgroup 45.

Furthermore, the symbol B3 in FIG. 5 denotes subgroups 46 to 51, which are grouped based on "composite attributes", which combine a plurality of attributes, i.e., "Employment Type" and "Marital Status". The "composite attribute" has the value "part-timer and single" in the subgroups 46 and 48, and the "composite attribute" has the value "part-timer and married" in the subgroups 47 and 50. The "composite attribute" has the value "single and regular" in the subgroup 49, and the "composite attribute" has the value "married and regular" in the subgroup 51. In FIG. 5, the word "and" is represented by the multiplication symbol "*".

In FIG. 5, each of the "Employment Type", "Marital Status", and "composite attributes" combining the employment type and the marital status denoted by the symbols B2 and B3 is one example of the third attribute.

The subgroups 42 to 51 may include subgroups where the second attribute has the value "Male" and subgroups where the second attribute has the value "Female". Among the subgroups 42 to 51, subgroups where the second attribute has the second value (e.g., "Male") are denoted as subgroups 42a to 51a, and subgroups where the second attribute has the third value (e.g., "Female") are denoted as subgroups 42b to 51b. The subgroups 42a to 51a are examples of the third group.

Here, in the example illustrated in FIG. 5, the fairness evaluation apparatus 1 identifies the targets to execute the fairness evaluation. To do this, the fairness evaluation apparatus 1 determines, for each subgroup, whether or not the positive case ratio (hiring rate) of the subgroup is > $C_1$ (0.51) or the positive case ratio (hiring rate) < $C_2$ (0.22). In the example in FIG. 5, the fairness evaluation apparatus 1 identifies the subgroups 42-46, 47a, 48, 49, 50a, and 51 of which the positive case ratio is outside the range of $C_1$ to $C_2$ (numerical range C), as targets to execute the fairness evaluation. On the other hand, the fairness evaluation apparatus 1 determines to suppress the execution of the fairness evaluation for the subgroups 47b and 50b of which the positive case ratio falls within the range of $C_1$ to $C_2$.

In the example indicated by the symbol B2 in FIG. 5, there is a significant difference in DI between the first group 41a and the second group 41b. However, in the subgroups 42-45, the DI values are close between males and females. In this case, conventional approaches might misevaluate the differences in the first attribute according to the second attribute in the subgroups 42-45 (such as differences in the number of hired applicants) as explainable discrimination (distinction). Once misevaluated as explainable discrimination (distinction), the execution of the fairness evaluation might be omitted for the lower-level subgroups 46-51 (see the symbol B3).

However, in the example indicated by the symbol B3 in FIG. 5, the lower-level subgroups 46-51 have a disparity in the DI between males and females, indicating the presence of unfair bias. This is an example of "Simpson's Paradox", where even if a hypothesis holds in a certain group, there is a possibility that the hypothesis does not hold in lower-level groups that are divisions of that group. In a such case, conventional approaches might omit the fairness evaluation for the subgroups 46-51 that contain unfair bias or correction, such as processing of data. Consequently, bias could remain in the data 111b.

On the other hand, according to one embodiment, the determination as to whether the fairness evaluation is performed or not is made for each subgroup divided based on a composite attribute with a combination length longer than the combination length of attributes for the subgroups 42-45, which might be misevaluated as including an explainable discrimination (distinction). Here, the "combination length" may mean the number of attributes combined. Thus, in the example illustrated in FIG. 5, the fairness evaluation apparatus 1 can identify the subgroups 46, 47a, 48, 49, 50a, and 51 that meet the criterion for executing the evaluation, as targets to execute the fairness evaluation.

[B] Example of Functional Configuration

FIG. 6 is a block diagram illustrating an example of the functional configuration of the fairness evaluation apparatus 1 according to one embodiment. The fairness evaluation apparatus 1 represents one example of an information processing apparatus or a computer that executes a fairness evaluation process for evaluating the fairness of data. For example, the fairness evaluation apparatus 1 may execute the fairness evaluation process and extend training data used to train a machine learning model by processing (modifying) the training data, etc., based on the execution result. This prevents unfair inference results from being outputted by the machine learning model.

As illustrated in FIG. 6, the fairness evaluation apparatus 1 may include, for example, a memory unit 11, an obtainment unit 12, a protected attribute determination unit 13, a bias calculation unit 14, a subgroup distribution estimation unit 15, an execution criterion calculation unit 16, a subgroup search unit 17, a positive case ratio calculation unit 18, a determination unit 19, a fairness metric calculation unit 20, and a data processing unit 21. The fairness evaluation apparatus 1 may also include a machine learning unit 22 and may further include an inference processing unit 23. These blocks 12-23 are examples of a controller 24.

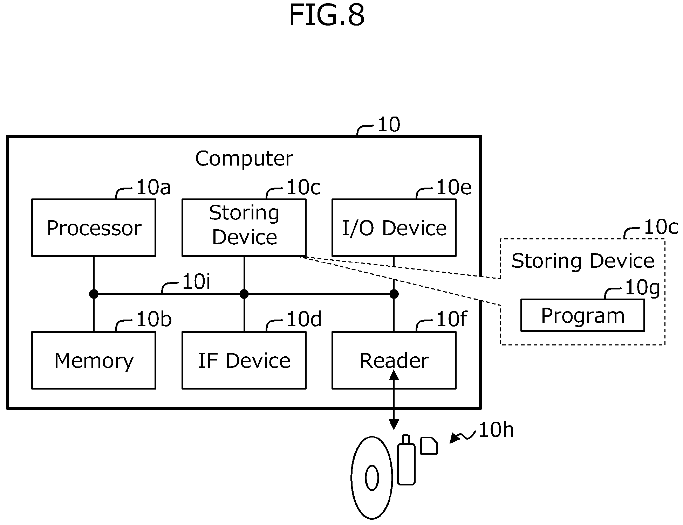

The memory unit 11 represents one example of a storage area and stores various data used by the fairness evaluation apparatus 1. The memory unit 11 may be embodied, for example, by the storage areas in either or both of a memory 10b and a storing device 10c illustrated in FIG. 8, which will be described later.

As illustrated in FIG. 6, the memory unit 11 may store, as an example, data 111, protected attribute information 112, and training data 113 (processed data). When the fairness evaluation apparatus 1 includes the machine learning unit 22, the memory unit 11 may also store a machine learning model 114. Furthermore, when the fairness evaluation apparatus 1 includes the inference processing unit 23, the memory unit 11 may store an inference result 115.

The information stored in the memory unit 11 may be in tabular or other formats. In one example, at least one of piece of information stored in the memory unit 11 may be in various formats such as a database or array.

The obtainment unit 12 obtains various information used in the fairness evaluation apparatus 1. For example, the obtainment unit 12 may obtain the data 111 and the protected attribute information 112 from a device (not illustrated) that provides data and store them in the memory unit 11.

The data 111 is data including a plurality of attributes and represents one example of training data. Each of the plurality of attributes may be a protected or non-protected attribute. For example, the data 111 may be the data 111a illustrated in FIG. 2 or the data 111b illustrated in FIG. 4.

The protected attribute information 112 is information for identifying (e.g., specifying) protected attributes among the plurality of attributes included in the data 111.

The protected attribute determination unit 13 identifies a protected attribute based on the protected attribute information 112 from the plurality of attributes included in the data 111.

The bias calculation unit 14 calculates the disparity (bias) in positive case ratios between multiple values of the identified protected attribute (e.g., between male and female).

For example, the bias calculation unit 14 identifies the second ratio $P_1$ (Y=1 | A=a1) and the third ratio $P_2$ (Y=1 | A=a2), and calculates the bias present in the attribute of interest (in one example, a protected attribute) based on the second ratio $P_1$ and the third ratio $P_2$. The bias represents one example of the numerical range C calculated based on the above formula (4) .

In one example, the bias calculation unit 14 calculates the statistical parity difference. The statistical parity difference is represented by the difference in positive case ratios between groups with different values of the attribute of interest. The statistical parity difference represents one example of a fairness metric.

The subgroup distribution estimation unit 15 identifies the first ratio $P_0$ (Y=1) of data pieces with the first attribute of the plurality of attributes having the first value in the data 111. For example, the subgroup distribution estimation unit 15 may identify the overall positive case ratio for the first attribute (a class corresponding to the objective variable) as the first ratio $P_0$ (Y=1).

For example, the subgroup distribution estimation unit 15 may identify the overall positive case ratio through the estimation of the positive case ratio distribution across the plurality of subgroups included in the data 111. In one example, the subgroup distribution estimation unit 15 may estimate the positive case ratio representing the peak of the distribution of the positive case ratios of the plurality of subgroups.

The execution criterion calculation unit 16 calculates a criterion for selecting subgroups to execute the fairness evaluation, based on the first ratio $P_0$, the second ratio $P_1$, and the third ratio $P_2$.

For example, the execution criterion calculation unit 16 may calculate the parameters $C_0$, $C_1$, and $C_2$ as criteria for executing the fairness evaluation, based on the above formulas (1) to (3) or the above formulas (1) and (4).

The subgroup search unit 17 searches for a plurality of subgroups in the data 111. For example, the subgroup search unit 17 may combine a plurality of attributes (explanatory variables) included in the data 111 to identify a plurality of subgroups each having at least one protected attribute. The upper limit of the combination length, which is the number of attributes combined, may be specified in advance based on the expected computational load according to the content of the data 111, for example. Note that the searching approach for subgroups may be breadth-first search or depth-first search.

The positive case ratio calculation unit 18 obtains the positive case ratio for each of the identified plurality of subgroups. For example, the positive case ratio calculation unit 18 may calculate the positive case ratio of each value of the protected attribute for each of the plurality of subgroups. The positive case ratio of each subgroup is one example a fourth ratio of (the occurrence of) data pieces with the first attribute having the first value in the third group.

The determination unit 19 determines whether or not the calculated positive case ratio (the fourth ratio) for each of the plurality of subgroups meets the criterion. In one example, the determination unit 19 determines that the criterion is met if the calculated positive case ratio satisfies either the positive case ratio $> C_1$ or the positive case ratio $< C_2$.

The fairness metric calculation unit 20 executes the fairness evaluation for subgroups that have been determined by the determination unit 19 to meet the criterion. A subgroup that has been determined as a subgroup to execute the fairness evaluation represents one example of the third group with the second attribute having the second value and a third attribute of the plurality of attributes having a fourth value.

Note that the fairness metric calculation unit 20 may identify a fifth ratio of the occurrence of data pieces with the first attribute having the first value in the fourth group, the fourth group being a group with the second attribute having the third value (in one example, gender is female) and a third attribute of the plurality of attributes having the fourth value. In other words, the fairness metric calculation unit 20 may identify the fifth ratio associated with the fourth group, the fourth group being related to the third group determined to perform the fairness evaluation, and the fourth group having a value of the second attribute, which is a protected attribute, different from that of the third group.

Then, the fairness metric calculation unit 20 may execute the fairness evaluation based on the fourth ratio (in one example, the positive case ratio of males) and the fifth ratio (in one example, the positive case ratio of females).

In one example, the fairness metric may be the statistical parity difference or may be the Disparate Impact (DI). The statistical parity difference may be based on the difference between the fourth ratio and the fifth ratio. The DI may be based on the ratio between the fourth ratio and the fifth ratio. However, the fairness metric is not limited to these examples and may use various other metrics.

The data processing unit 21 generates training data 113 for machine learning by processing a part of the plurality of data pieces 111 based on the result of the fairness evaluation. The processing approach may be any approach that mitigates unfairness (discrimination) in the data 111 based on the result of the fairness evaluation, and it may be implemented using various known approaches. In one example, values of non-protected attributes other than a protected attribute in the data 111 may be modified to reduce correlations between the protected and non-protected attributes.

As described above, the fairness evaluation apparatus 1 may include the machine learning unit 22, and may further include the inference processing unit 23.

In the machine learning (training) phase, the machine learning unit 22 performs a machine learning process to train the machine learning model 114 using the processed data modified by the data processing unit 21 to mitigate discrimination as training data 113. The machine learning model 114 may be an Neural Network (NN) model that includes trained parameters. The machine learning process can be implemented using various known approaches.

The inference processing unit 23 performs an inference process in the inference phase using the machine learning model 114 that has been trained based on the processed training data 113. For example, the inference processing unit 23 inputs data (not illustrated) to be subjected to the inference process into the machine learning model 114 and stores the inference result 115 output from the machine learning model 114 in the memory unit 11.

[C] Example of Operations

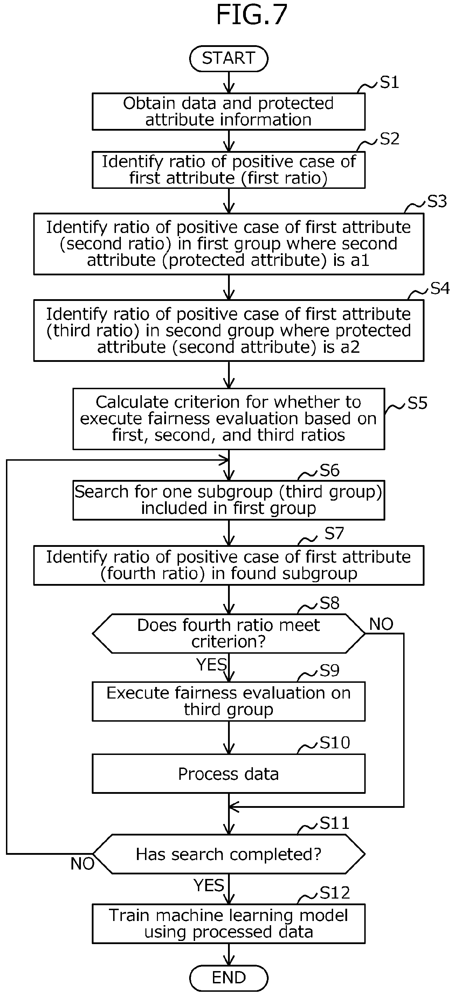

Next, an example of operations of the fairness evaluation apparatus 1 according to one embodiment will be explained. FIG. 7 is a flowchart illustrating an example of the operations of the fairness evaluation apparatus 1 according to one embodiment.

As illustrated in FIG. 7, the obtainment unit 12 of the fairness evaluation apparatus 1 obtains data 111 and protected attribute information 112 (Step S1) and stores them in the memory unit 11.

The subgroup distribution estimation unit 15 identifies the first ratio $P_0$ (Y=1) (Step S2). The first ratio is the ratio of the occurrence of data pieces with the first attribute Y of interest having the first value (Y=1). The first ratio may be the positive case ratio, which is the ratio at which the first attribute assumes the positive case (the value is positive).

The bias calculation unit 14 identifies the second ratio $P_1$ (Y=1|A=a1) (Step S3). The second ratio $P_1$ (Y=1|A=a1) is the ratio of the occurrence of data pieces with the first attribute Y having the first value (Y=1) in the first group where the second attribute A of the plurality of attributes has the second value (A=a1).

The bias calculation unit 14 identifies the third ratio $P_2$ (Y=1|A=a2) (Step S4). The third ratio $P_2$ (Y=1|A=a2) is the ratio of the occurrence of data pieces with the first attribute Y having the first value (Y=1) in the second group where the second attribute A of the plurality of attributes has the third value (A=a2).

Note that the processing order of Steps S1 to S3 is not limited to that illustrated in FIG. 7. For example, Steps S1 to S3 may be performed in parallel.

The execution criterion calculation unit 16 calculates criteria $C_0$, $C_1$, and $C_2$, which are used to select subgroups for which the fairness evaluation is to be executed, based on the first ratio $P_0$ (Y=1), the second ratio $P_1$ (Y=1 | A=a1), and the third ratio $P_2$ (Y=1 | A=a2) (Step S5).

Although the distribution of positive case ratios across a plurality of subgroups is assumed to follow a normal distribution in one embodiment, this is not limiting. The values of $C_0$, $C_1$, and $C_2$ may be adjusted according to the estimated distribution of positive case ratios across the plurality of subgroups. For example, $C_0$ may be adjusted based on the peak position of the distribution of positive case ratios across the plurality of subgroups, and $C_1$ and $C_2$ may be adjusted so that the numerical value range between $C_1$ and $C_2$ widens as the half-width of the distribution of positive case ratios across the plurality of subgroups increases.

The subgroup search unit 17 searches for one subgroup included in the first group (Step S6). In other words, the subgroup search unit 17 searches for a third group with the second attribute having the second value (included in the first group) and the third attribute of the plurality of attributes having the fourth value.

The positive case ratio calculation unit 18 identifies the fourth ratio (Step S7). The fourth ratio is the ratio of the occurrence of data pieces with the first attribute Y having the first value (Y=1) (the positive case) in the identified subgroup (the third group).

The determination unit 19 determines whether or not the fourth ratio identified in Step S7 meets the criterion calculated in Step S5 (Step S8). If the fourth ratio does not meet the criterion (NO in Step S8), the process moves to Step S11.

If the fourth ratio meets the criterion (YES in Step S8), the fairness metric calculation unit 20 executes a fairness evaluation for the subgroup that has been determined to meet the criterion by the determination unit 19 (Step S9).

The data processing unit 21 generates training data 113 for machine learning by processing a part of the plurality of data pieces 111 based on the result of the fairness evaluation (Step S10). The processing approach may be any approach that mitigates unfairness (discrimination) in the data 111 based on the result of the fairness evaluation, and it may be implemented using various known approaches.

The subgroup search unit 17 determines whether or not the search for subgroups has been completed (Step S11). Here, the subgroup search unit 17 may determine whether or not the search has been completed based on the upper limit of the combination length and the searched subgroups.

If the search for subgroups has not been completed yet (NO in Step S11), the processes in Steps S6 to S11 are repeated.

If the search has been completed (YES in Step S11), the machine learning unit 22 trains the machine learning model 114 using the generated training data 113 (Step S12), and the process is completed.

[D] Effects of One Embodiment

According to the approach of one embodiment, the fairness evaluation apparatus 1 obtains a plurality of data pieces 111 and identifies the first ratio $P_0$ (Y=1) of data pieces with a first attribute of a plurality of attributes having a first value, among the plurality of data pieces 111. Additionally, the fairness evaluation apparatus 1 identifies the second ratio $P_1$ (Y=1|A=a1) of data pieces with the first attribute having the first value in a first group, the first group being a group where a second attribute of the plurality of attributes has a second value a1. Furthermore, the fairness evaluation apparatus 1 identifies the third ratio $P_2$ (Y=1 | A=a2) of data pieces with the first attribute having the first value in a second group, the second group being a group where the second attribute has a third value. Additionally, the fairness evaluation apparatus 1 executes a fairness evaluation for a third group where the second attribute has the second value and a third attribute of the plurality of attributes has a fourth value when a fourth ratio of an occurrence of data pieces with the first attribute having the first value in the third group meets a criterion. The criterion is based on the first ratio $P_0$ (Y=1), the second ratio $P_1$ (Y=1 | A=a1), and the third ratio $P_2$ (Y=1 | A=a2).

Since, this approach suppresses the execution of the fairness evaluation for third groups that do not meet the criterion, for example, the computational load for evaluating the fairness of data used to train a machine learning model can be reduced. For example, since the number of third groups increases as the number of attributes included in the data 111 increases, the computational load can be reduced more significantly compared to cases where the fairness evaluation is executed for all third groups.

An example of computational load reduction will be described with reference to the case where the fairness evaluation process of one embodiment is applied to open data related to human thermal sensation. Here, the objective variable (Y) represents whether a person felt cold or not. The positive case (Y=1) indicates a case where the person felt cold. The explanatory variables (attributes) include five attributes, including the protected attribute "gender". The dimensionality of the open data after binarization is 20.

When the fairness metrics are calculated across all combinations for the above-mentioned open data, the fairness metrics may be calculated for 21,699 subgroups. In contrast, when the approach of one embodiment is applied to the above-mentioned open data, the calculation of the fairness metrics is reduced to 6,301 subgroups. Accordingly, in the above-mentioned example, the fairness metric calculation is eliminated for 15,398 subgroups, thereby reducing the computational load accordingly.

Furthermore, the potential risk of fairness in the plurality of data pieces 111 can be detected, even when the aforementioned "Simpson's Paradox" arises.

Furthermore, since the criterion is established based on the first ratio $P_0$, the second ratio $P_1$, and the third ratio $P_2$, it is possible to determine subgroups to suppress the fairness evaluation, taking into account the distribution of the positive case ratios in subgroups and the statistical measures of bias.

Additionally, the process of executing the fairness evaluation includes calculating a numerical range C that has a numerical width obtained based on the difference between the second ratio $P_1$ and the third ratio $P_2$, and includes the first ratio $P_0$ within the range. The computer 10 determines that the criterion is met if the fourth ratio is outside the numerical range C.

This allows for omission of the calculation of the fairness evaluation on subgroups that are densely clustered around the overall positive case ratio in the distribution of positive case ratios across subgroups and have relatively small biases, which enhances the effect of reducing the computational load.

Furthermore, the process of executing the fairness evaluation includes identifying a fifth ratio of an occurrence of data pieces with the first attribute having the first value in a fourth group, the fourth group being a group where the second attribute has the third value and a third attribute of the plurality of attributes has a fourth value, and executing the fairness evaluation based on the fourth ratio and the fifth ratio.

Accordingly, fairness can be appropriately evaluated by utilizing the fourth ratio used in the determination of the criterion.

Additionally, the fairness evaluation apparatus 1 further generates training data for machine learning by processing a part of the plurality of data pieces based on the result of the fairness evaluation.

This can mitigate potential fairness risks in the training data for machine learning, thereby preventing discriminatory inferences made by a machine learning model trained based on unfair bias.

The above approach can be applied to the fairness evaluation of training data for machine learning models used in fields such as education, healthcare, communications, and business, and it can also be utilized for designing and auditing of AI.

[E] Example of Hardware Configuration

The fairness evaluation apparatus 1 according to one embodiment (see FIG. 6) may be a virtual server (VM; Virtual Machine) or a physical server. Furthermore, the functions of the fairness evaluation apparatus 1 may be embodied by a single computer or by two or more computers. Moreover, at least part of the functions of the fairness evaluation apparatus 1 may be embodied using HW (Hardware) and NW (Network) resources provided by a cloud environment.

FIG. 8 is a block diagram illustrating an example of the hardware (HW) configuration of a computer 10 that embodies the functions of the fairness evaluation apparatus 1 according to one embodiment. When multiple computers are used as HW resources to embody the functions of the fairness evaluation apparatus 1, each computer may include the HW configuration illustrated in FIG. 8.

As illustrated in FIG. 8, the computer 10 may include, as an example, a processor 10a, a memory 10b, a storing device 10c, an interface (IF) device 10d, an input/output (IO) device 10e, and a reader 10f, as the HW configuration.

The processor 10a represents one example of a processing device that performs various control and arithmetic operations. The processor 10a may be communicably connected to each block in the computer 10 via a bus 10i. The processor 10a may be a multiprocessor having a plurality of processors, a multicore processor having a plurality of processor cores, or may be configured to have a plurality of multicore processors.

Examples of the processor 10a include integrated circuits (ICs) such as a CPU, MPU, GPU, APU, DSP, ASIC, and FPGA, for example. Note that two or more combinations of these integrated circuits may be used for the processor 10a. CPU is an abbreviation for Central Processing Unit, and MPU is an abbreviation for Micro Processing Unit. GPU is an abbreviation for Graphics Processing Unit, and APU is an abbreviation for Accelerated Processing Unit. DSP is an abbreviation for Digital Signal Processor, ASIC is an abbreviation for Application Specific IC, and FPGA is an abbreviation for Field-Programmable Gate Array.

For example, if the fairness evaluation apparatus 1 performs a machine learning process or inference process in addition to the fairness evaluation process according to one embodiment, the processor 10a may be a combination of a processing device, such as a CPU that executes the fairness evaluation process, and an accelerator that performs the machine learning or inference process. Examples of the accelerator include the above-described GPU, APU, DSP, ASIC, or FPGA, for example.

The memory 10b represents one example of HW that stores information, such as various data and programs. Examples of the memory 10b include either or both of volatile memory such as Dynamic Random Access Memory (DRAM) and non-volatile memory such as Persistent Memory (PM), for example.

The storing device 10c is one example of HW for storing information, such as various data and programs.. Examples of the storing device 10c include various storing devices such as magnetic disk devices, e.g., an Hard Disk Drive (HDD), semiconductor drive devices, e.g., Solid State Drive (SSD), and non-volatile memory. Examples of non-volatile memory include flash memory, Storage Class Memory (SCM), and Read Only Memory (ROM), for example.

The storing device 10c may store a program 10g (fairness evaluation program) for embodying all or a part of the various functions of the computer 10.

For example, the processor 10a in the fairness evaluation apparatus 1 may embody the functions of the fairness evaluation apparatus 1 (controller 24 illustrated in FIG. 6) by deploying the program 10g stored in the storing device 10c to the memory 10b and executing the program 10g.

The IF device 10d represents one example of a communication interface that controls connections and communications between various networks, including the network between the fairness evaluation apparatus 1 and apparatuses not illustrated. Examples of the apparatuses include computers such as user terminals or servers that provide data to the fairness evaluation apparatus 1, and servers that perform machine learning processes based on data output from the fairness evaluation apparatus 1.

For example, the IF device 10d may include an adapter that is compliant with a communication standard such as Local Area Network (LAN), e.g., Ethernet®, or optical communication, e.g., Fibre Channel (FC). This adapter may support either or both of wireless and wired communication approaches.

Note that the program 10g may be downloaded from the network to the computer 10 via the communication IF and stored in the storing device 10c.

The IO device 10e may include either or both an input device and an output device. Examples of the input device include a keyboard, mouse, and touch panel, for example. Examples of the output device include a monitor, projector, and printer, for example. The IO device 10e may also include a touch panel that integrates an input device and a display device.

The reader 10f represents one example of a reader that reads information such as data and programs recorded on a storage medium 10h. The reader 10f may include a connection terminal or device to which the storage medium 10h can be connected or inserted. Examples of the reader 10f include adapters that are compliant with standards such as Universal Serial Bus (USB), drive devices that access recording disks, and card readers that access flash memory such as SD cards, for example. Note that the program 10g may be stored in the storage medium 10h, and the reader 10f may read the program 10g from the storage medium 10h and store the program 10g in the storing device 10c.

The storage medium 10h may be, as an example, a non-transitory computer-readable storage (recording) medium such as a magnetic/optical disk or flash memory. Examples of the magnetic/optical disk include, as an example, flexible disks, Compact Discs (CDs), Digital Versatile Discs (DVDs), Blu-ray discs, and Holographic Versatile Discs (HVDs). Examples of the flash memory include semiconductor memory devices such as USB memory and SD cards.

The HW configuration of the computer 10 described above is exemplary. Accordingly, the addition or removal of HW components in the computer 10 (such as adding or removing any block), division, integration in any combination, or addition or removal of buses may be carried out as appropriate.

[F] Miscellaneous

The technology of the above-described embodiment may be modified or changed as follows.

For example, the blocks 12 to 21 (and machine learning unit 22 and inference processing unit 23) included in the fairness evaluation apparatus 1 illustrated in FIG. 6 may be combined in any combination or may be divided as needed.

Additionally, the fairness evaluation apparatus 1 illustrated in FIG. 6 may have a configuration (system) in which multiple devices cooperate with each other via a network to embody each processing function. As one example, the memory unit 11 may be a DB server, the obtainment unit 12 may be a web server or application server, and the blocks 13 to 23 may be an application server. In this case, the DB server, application server, and web server may cooperate with each other via a network to embody each processing function of the fairness evaluation apparatus 1.

REFERENCE SIGNS LIST

| 1 | Fairness evaluation apparatus |
|---|---|
| 10 | Computer |
| 10a | Processor |
| 10b | Memory |
| 10c | Storing device |
| 10d | IF device |
| 10e | IO device |
| 10f | Reader |
| 10h | Storage medium |
| 10g | Program |
| 11 | Memory unit |
| 12 | Obtainment unit |
| 13 | Protected attribute determination unit |
| 14 | Bias calculation unit |
| 15 | Subgroup distribution estimation unit |
| 16 | Execution criterion calculation unit |
| 17 | Subgroup search unit |
| 18 | Positive case ratio calculation unit |
| 19 | Determination unit |
| 20 | Fairness metric calculation unit |
| 21 | Data processing unit |
| 22 | Machine learning unit |
| 23 | Inference processing unit |
| 24 | Controller |

**Claims**

1. A fairness evaluation program causing a computer to execute a process comprising:

   obtaining a plurality of data pieces (111);
   identifying a first ratio of data pieces with a first attribute of a plurality of attributes of the plurality of data pieces having a first value, among the plurality of data pieces;
   identifying a second ratio of data pieces with the first attribute having the first value in a first group, and a third ratio of data pieces with the first attribute having the first value in a second group, the first group being a group where a second attribute of the plurality of attributes has a second value, the second group being a group where the second attribute has a third value; and
   executing a fairness evaluation for a third group where the second attribute has the second value and a third attribute of the plurality of attributes has a fourth value, when a fourth ratio of data pieces with the first attribute having the first value in the third group meets a criterion based on the first ratio, the second ratio, and the third ratio.

2. The fairness evaluation program according to claim 1, wherein
   the process of executing the fairness evaluation comprises:

   calculating a numerical range that has a numerical width obtained based on a difference between the second ratio and the third ratio, and includes the first ratio within the numerical range; and
   determining that the criterion is met when the fourth ratio is within the numerical range.

3. The fairness evaluation program according to claim 1, wherein
   the process of executing the fairness evaluation comprises:

   identifying a fifth ratio of data pieces with the first attribute having the first value in a fourth group, the fourth group being a group where the second attribute has the third value and a third attribute of the plurality of attributes has a fourth value; and
   executing the fairness evaluation based on the fourth ratio and the fifth ratio.

4. The fairness evaluation program according to any one of claims 1 to 3,

   causing the computer to execute a process comprising

generating training data (113) for machine learning by processing a part of the plurality of data pieces (111) based on a result of the fairness evaluation.

5. A computer-implemented fairness evaluation method comprising a process executed by a computer (1, 10):

obtaining a plurality of data pieces (111);
identifying a first ratio of data pieces with a first attribute of a plurality of attributes of the plurality of data pieces having a first value, among the plurality of data pieces;
identifying a second ratio of data pieces with the first attribute having the first value in a first group, and a third ratio of data pieces with the first attribute having the first value in a second group, the first group being a group where a second attribute of the plurality of attributes has a second value, the second group being a group where the second attribute has a third value; and
executing a fairness evaluation for a third group where the second attribute has the second value and a third attribute of the plurality of attributes has a fourth value, when a fourth ratio of data pieces with the first attribute having the first value in the third group meets a criterion based on the first ratio, the second ratio, and the third ratio.

6. The computer-implemented fairness evaluation method according to claim 5, wherein
the process of executing the fairness evaluation comprises:

calculating a numerical range that has a numerical width obtained based on a difference between the second ratio and the third ratio, and includes the first ratio within the numerical range; and
determining that the criterion is met when the fourth ratio is outside the numerical range.

7. The computer-implemented fairness evaluation method according to claim 5, wherein
the process of executing the fairness evaluation comprises:

identifying a fifth ratio of data pieces with the first attribute having the first value in a fourth group, the fourth group being a group where the second attribute has the third value and a third attribute of the plurality of attributes has a fourth value; and
executing the fairness evaluation based on the fourth ratio and the fifth ratio.

8. The computer-implemented fairness evaluation method according to any one of claims 5 to 7, wherein

the computer (1, 10) executes a process comprising
generating training data (113) for machine learning by processing a part of the plurality of data pieces (111) based on a result of the fairness evaluation.

9. An information processing apparatus comprising a controller (24), the controller (24) being configured to:

identify a first ratio of data pieces with a first attribute of a plurality of attributes of the plurality of data pieces having a first value, among the plurality of data pieces;
identify a second ratio of data pieces with the first attribute having the first value in a first group, and a third ratio of data pieces with the first attribute having the first value in a second group, the first group being a group where a second attribute of the plurality of attributes has a second value, the second group being a group where the second attribute has a third value; and
execute a fairness evaluation for a third group where the second attribute has the second value and a third attribute of the plurality of attributes has a fourth value, when a fourth ratio of data pieces with the first attribute having the first value in the third group meets a criterion based on the first ratio, the second ratio, and the third ratio.

10. The information processing apparatus according to claim 9, wherein
the controller (24), in the process of executing the fairness evaluation, is configured to:

calculate a numerical range that has a numerical width obtained based on a difference between the second ratio and the third ratio, and includes the first ratio within the numerical range; and
determine that the criterion is met when the fourth ratio is outside the numerical range.

11. The information processing apparatus according to claim 9, wherein
the controller (24), in the process of executing the fairness evaluation, is configured to:

identify a fifth ratio of data pieces with the first attribute having the first value in a fourth group, the fourth group being a group where the second attribute has the third value and a third attribute of the plurality of attributes has a fourth value; and
execute the fairness evaluation based on the fourth ratio and the fifth ratio.

12. The information processing apparatus according to any one of claims 9 to 11, wherein
the controller (24) is configured to generate training data (113) for machine learning by processing a part of the plurality of data pieces (111) based on a result of the fairness evaluation.

# FIG.1

# FIG.2

One Example of Data ⌇111a

| Applicant ID | Pass/Fail | Gender | Department |
|---|---|---|---|
| #0001 | Accepted | Male | Computer |
| #0002 | Rejected | Female | Medicine |
| #0003 | Accepted | Female | Medicine |
| #0002 | Accepted | Male | Computer |
| ... | ... | ... | ... |

A1

| | All Departments |
|---|---|
| Number of Applicants | 2000 |
| Acceptance Ratio (%) | 30 |
| Number of Accepted Applicants | 600 |

A2

| | All Departments | |
|---|---|---|
| | Female | Male |
| Number of Applicants | 1000 | 1000 |
| Acceptance Ratio (%) | 24 | 36 |
| Number of Accepted Applicants | 240 | 360 |

31b    31a

32    A3    33

| | Medicine | | Computer | |
|---|---|---|---|---|
| | Female | Male | Female | Male |
| Number of Applicants | 800 | 200 | 200 | 800 |
| Acceptance Ratio (%) | 20 | 20 | 40 | 40 |
| Number of Accepted Applicants | 160 | 40 | 80 | 320 |

32b    32a    33b    33a

# FIG.3

$$C_0 = P_0(Y=1)$$

$$C_1 = P_0(Y=1) + (|P_1(Y=1|A=a1) - P_2(Y=1|A=a2)|)/2$$

$$C_2 = P_0(Y=1) - (|P_1(Y=1|A=a1) - P_2(Y=1|A=a2)|)/2$$

# FIG.4

Another Example of Data

~111b

| Applicant ID | Result | Gender | Marital Status | Employment Type |
|---|---|---|---|---|
| #00001 | Hired | Male | Single | Full-time (Regular) |
| #00002 | Not Hired | Female | Married | Full-time (Regular) |
| #00003 | Hired | Female | Married | Part-time |
| #00002 | Not Hired | Male | Married | Part-time |
| ... | ... | ... | ... | ... |

## FIG.5

**41 / B1**

|  | Female | Male |
|---|---|---|
|  | 1000 | 1000 |
| Hiring Rate | 22% | 51% |
| Number of Hires | 220 | 505 |
| DI | 44% | 100% |

**41c**

| Sum |
|---|
| 2000 |
| 36% |
| 725 |

Calculate Criteria
Ratio of Positive Cases
(Hiring Rate) is
21% (=36-15) or less, and
51% (=36+15) or more

Appears as Explainable Discrimination

**B2**

**42 — Part**

|  | Female | Male |
|---|---|---|
|  | 800 | 200 |
| Hiring Rate | 13% | 13% |
| Number of Hires | 100 | 25 |
| DI | 100% | 100% |

**43 — Regular**

|  | Female | Male |
|---|---|---|
|  | 200 | 800 |
| Hiring Rate | 60% | 60% |
| Number of Hires | 120 | 480 |
| DI | 100% | 100% |

**44 — Single**

|  | Female | Male |
|---|---|---|
|  | 700 | 300 |
| Hiring Rate | 4% | 4% |
| Number of Hires | 25 | 11 |
| DI | 97% | 103% |

**45 — Married**

|  | Female | Male |
|---|---|---|
|  | 300 | 700 |
| Hiring Rate | 65% | 65% |
| Number of Hires | 195 | 494 |
| DI | 92% | 109% |

**B3**

**47 — Part * Married**

|  | Female | Male |
|---|---|---|
|  | 200 | 100 |
| Hiring Rate | 48% | 15% |
| Number of Hires | 95 | 15 |
| DI | 317% | 32% |

**48 — Single * Part**

|  | Female | Male |
|---|---|---|
|  | 600 | 100 |
| Hiring Rate | 1% | 10% |
| Number of Hires | 5 | 10 |
| DI | 8% | 1200% |

**49 — Single * Regular**

|  | Female | Male |
|---|---|---|
|  | 100 | 200 |
| Hiring Rate | 20% | 6% |
| Number of Hires | 20 | 11 |
| DI | 364% | 28% |

**46 — Part * Single**

|  | Female | Male |
|---|---|---|
|  | 600 | 100 |
| Hiring Rate | 1% | 10% |
| Number of Hires | 5 | 10 |
| DI | 8% | 1200% |

**50 — Married * Part**

|  | Female | Male |
|---|---|---|
|  | 200 | 100 |
| Hiring Rate | 48% | 15% |
| Number of Hires | 95 | 15 |
| DI | 317% | 32% |

**51 — Married * Regular**

|  | Female | Male |
|---|---|---|
|  | 100 | 600 |
| Hiring Rate | 100% | 80% |
| Number of Hires | 100 | 479 |
| DI | 125% | 80% |

Bias is Present

# FIG.6

Fairness Evaluation Apparatus — ~1

- Memory Unit — ~11
  - Data — 111
  - Protected Attribute Information — 112
  - Training Data — 113
  - Machine Learning Model — 114
  - Inference Result — 115

- Obtainment Unit — ~12
- Protected Attribute Determination Unit — ~13
- Bias Calculation Unit — ~14
- Subgroup Distribution Estimation Unit — ~15
- Execution Criterion Calculation Unit — ~16
- Subgroup Search Unit — ~17
- Positive Case Ratio Calculation Unit — ~18
- Determination Unit — ~19
- Fairness Metric Calculation Unit — ~20
- Data Processing Unit — ~21
- Machine Learning Unit — ~22
- Inference Processing Unit — ~23

24:Controller

# FIG.7

START

Obtain data and protected
attribute information ~S1

Identify ratio of positive case of
first attribute (first ratio) ~S2

Identify ratio of positive case of first attribute
(second ratio) in first group where second
attribute (protected attribute) is a1 ~S3

Identify ratio of positive case of first attribute
(third ratio) in second group where protected
attribute (second attribute) is a2 ~S4

Calculate criterion for whether to
execute fairness evaluation based on
first, second, and third ratios ~S5

Search for one subgroup (third group)
included in first group ~S6

Identify ratio of positive case of first attribute
(fourth ratio) in found subgroup ~S7

Does fourth ratio meet
criterion? ~S8 — NO

YES

Execute fairness evaluation on
third group ~S9

Process data ~S10

Has search completed? ~S11 — NO

YES

Train machine learning model
using processed data ~S12

END

# FIG.8

## INTERNATIONAL SEARCH REPORT

International application No.

**PCT/JP2022/032546**

| A. | CLASSIFICATION OF SUBJECT MATTER |
|---|---|

*G06N 20/00*(2019.01)i
FI:  G06N20/00 130

According to International Patent Classification (IPC) or to both national classification and IPC

| B. | FIELDS SEARCHED |
|---|---|

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/044064 A1 (FUJITSU LTD.) 03 March 2022 (2022-03-03)<br>paragraphs [0017]-[0023], [0040]-[0048], [0055]-[0065], fig. 11 | 1-12 |
| A | KAMIRAN, Faisal et al. Data preprocessing techniques for classification without discrimination. Knowledge and Information Systems. October 2012, <URL: https://link.springer.com/content/pdf/10.1007/s10115-011-0463-8.pdf><br>section 5.3 | 1-12 |
| A | 楊明哲 ほか, 機械教示と公平性配慮型機械学習を用いた無意識バイアスの矯正, 人工知能学会全国大会論文集, 第35回(2021), 一般社団法人 人工知能学会, June 2021, (YANG, Mingzhe et al. Mitigating Unconscious Biases by Machine Teaching and Fairness-aware Machine Learning. Proceedings of the Annual Conference of JSAI, 35th (2021). THE JAPANESE SOCIETY FOR ARTIFICIAL INTELLIGENCE.)<br>chapters 1-3 | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/032546** |

| Patent document cited in search report | Publication date (day/month/year) | Patent family member(s) | Publication date (day/month/year) |
| --- | --- | --- | --- |
| WO 2022/044064 A1 | 03 March 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PEDRESCHI, D.** ; **RUGGIERI, S.** ; **TURINI, F**. Discrimination-aware data mining. *Proc. 14th ACM SIGKDD Int. Conf. on Knowledge Discovery and Data Mining*, 2008, 560-568

- **KAMIRAN, FAISAL** ; **ZLIOBAITE, INDRE** ; **CALDERS, TOON**. Quantifying explainable discrimination and removing illegal discrimination in automated decision making. *Knowledge and information systems*, 2013